Europäisches Patentamt

European Patent Office

Office européen des brevets

(11) Veröffentlichungsnummer: **0 487 888 A1**

(12) # EUROPÄISCHE PATENTANMELDUNG

(21) Anmeldenummer: **91117708.7**

(22) Anmeldetag: **17.10.91**

(51) Int. Cl.5: **B60T 8/26**, B60T 8/94, B60T 8/42

(30) Priorität: **24.11.90 DE 4037464**

(43) Veröffentlichungstag der Anmeldung:
**03.06.92 Patentblatt 92/23**

(84) Benannte Vertragsstaaten:
**DE ES FR GB IT SE**

(71) Anmelder: **ROBERT BOSCH GMBH**
**Postfach 30 02 20**
**W-7000 Stuttgart 30(DE)**

(72) Erfinder: **Kaes, Günter,**
**Markelsheimer Strasse 70**
**W-7000 Stuttgart 40(DE)**
Erfinder: **Friedow, Michael,**
**Uracher Weg 9**
**W-7146 Tamm(DE)**

(54) **Zweikreisbremsanlage.**

(57) Eine Zweikreisbremsanlage für Kraftfahrzeuge mit Blockierschutzeinrichtung (ABS) weist mindestens eine Druckreduziervorrichtung (44) auf, die zwischen dem Bremskreisausgang (18) des Hauptbremszylinders (16) und dem daran angeschlossenen Radbremszylinder (11) mindestens eines Hinterrades (14,15) angeordnet ist. Zur höheren Ausnutzung der in der Bremsanlage verfügbaren Bremsleistung ist der Druckreduziervorrichtung (44) ein Bypaß (45) mit Bypaßventil (46) parallel geschaltet. Das Bypaßventil (46), das in seiner unerregten Grundstellung sperrt, wird mit jeder Bremspedalbetätigung in seine Offenstellung umgesteuert. Bei Ausfall oder Funktionsstörung der Blockierschutzeinrichtung (10) unterbleibt die Ansteuerung des Bypaßventils (46).

Fig. 1

EP 0 487 888 A1

Stand der Technik

Die Erfindung geht aus von einer Zweikreisbremsanlage für Kraftfahrzeuge der im Oberbegriff des Anspruchs 1 definierten Gattung.

Bei einer bekannten Zweikreisbremsanlage mit Vorderrad/Hinterrad-Bremskreisaufteilung dieser Art (DE 29 18 772 A1) wird mittels der Druckreduziervorrichtung eine Druckbegrenzung oder Druckminderung des Bremsdrucks an den Radbremszylindern der Fahrzeug-Hinterachse immer dann vorgenommen, solange beim Bremsvorgang die intakte Blockierschutzeinrichtung (ABS) noch nicht anspricht. Um die volle Abbremsung der Hinterachse auszunutzen, wird die Druckbegrenzung bzw. -minderung dann aufgehoben, wenn die Regelfunktion der Blockierschutzeinrichtung entweder an der Vorder- oder an der Hinterachse einsetzt. Beim normalen Bremsfall, wenn also die Blockierschutzeinrichtung nicht anspricht, werden die Radbremszylinder der Hinterachse mit geringerem Druck angesteuert, die Hinterachse somit gegenüber der Vorderachse stets unterbremst, um die Spurstabilität und damit das Fahrverhalten des Fahrzeugs nicht negativ zu beeinflussen.

Vorteile der Erfindung

Die erfindungsgemäße Zweikreisbremsanlage mit den kennzeichnenden Merkmalen des Anspruchs 1 hat den Vorteil, daß eine höhere Bremsleistung der unveränderten Bremsanlage dadurch realisiert wird, daß bei jedem Bremsvorgang mit Betätigung des Bremspedals die Druckreduziervorrichtung für die Hinterräder kurzgeschlossen und damit ihre Wirkung aufgehoben wird. Nur bei Ausfall der Blockierschutzeinrichtung unterbleibt dieses. Damit gelangt bei jedem Bremsvorgang der Druck vom Hauptbremszylinder ungemindert an alle Radbremsen. Gegenüber der bekannten Zweikreisbremsanlage werden damit die Hinterräder wesentlich höher angebremst. Mit zunehmender Fahrzeugabbremsung nimmt die Überbremsung der Hinterachse gegenüber des Vorderachse zu bis beim Erreichen der Blockiergrenze die Blockierschutzeinrichtung (ABS) mit der Regelung des Bremsdrucks - zuerst an der Hinterachse und mit steigendem Bremsdruck dann auch an der Vorderachse - beginnt. Das Fahrzeug wird somit maximal abgebremst. Bei Ausfall oder Funktionsstörung der Blockierschutzeinrichtung bleibt indes die Durckreduziervorrichtung wirksam, d.h. ihre Funktion wird nicht aufgehoben, so daß dann reduzierter Bremsdruck an den Radbremszylindern der Hinterachse ansteht. Damit wird das Fahrzeug an der Hinterachse weniger als an der Vorderachse abgebremst. Die Fahrzeugstabilität bleibt erhalten.

Bei der erfindungsgemäßen Zweikreisbremsanlage wird mit geringem Aufwand die Effizienz der Blockierschutzeinrichtung hinsichtlich der Bremswegreduzierung unter Beibehaltung der Fahrzeugstabilität voll zum Tragen gebracht. Das bei manchen Fahrzeugtypen auftretende Problem, daß trotz Ansprechen der Blockierschutzeinrichtung relativ hohe Bremswege vorhanden sind bzw. die Vorderachse extrem hoch belastet werden und sich damit sehr stark erwärmen, wird durch die erfindungsgemäße Zweikreisbremsanlage beseitigt.

Durch die in den weiteren Ansprüchen aufgeführten Maßnahmen sind vorteilhafte Weiterbildungen und Verbesserungen der im Anspruch 1 angegebenen Zweikreisbremsanlage möglich.

Bei einer bevorzugten Ausführungsform der Erfindung ist die Druckreduziervorrichtung, die als Druckminderer oder als Druckbegrenzer ausgebildet werden kann, zwischen dem Bremskreisausgang des Hauptbremszylinders und dem Hydroaggregat der Blockierschutzeinrichtung angeordnet. Durch diese Maßnahme wird der Verschleiß der Druckreduziervorrichtung weitgehend herabgesetzt und dadurch deren Lebensdauer vergrößert. Dies ist dadurch bedingt, daß der Druckreduziervorrichtung ein weitgehend konstanter oder sich nur langsam ändernder Druck zugeführt wird, nicht hingegen die schnellen Druckänderungen der Blockierschutzeinrichtung. Letzteres würde zu einem ständigen Verfahren der Stellkolben in der Druckreduziervorrichtung und damit zu einem hohen Verscheiß dieses Bauelements führen.

Die erfindungsgemäße Zweikreisbremsanlage kann sowohl mit Vorderrad/Hinterrad-Bremskreisaufteilung als auch mit diagonaler Bremskreisaufteilung ausgeführt werden.

Zeichnung

Die Erfindung ist anhand von in der Zeichnung dargestellten Ausführungsbeispielen in der nachfolgenden Beschreibung näher erläutert. Es zeigen:

Fig. 1     ein Blockschaltbild einer Zweikreisbremsanlage mit Vorderachs-/Hinterachs-Bremskzeisaufteilung und Blockierschutzeinrichtung für einen Personenkraftwagen,

Fig. 2     einen Längsschnitt eines Druckminderers in der Zweikreisbremsanlage gemäß Fig. 1, schematisch dargestellt,

Fig. 3     einen Längsschnitt eines Druckbegrenzers in der Zweikreisbremsanlage nach Fig. 1, schematisch dargestellt,

Fig. 4     ein Blockschaltbild einer Zweikreisbremsanlage mit diagonaler Bremskreisaufteilung.

Beschreibung der Ausführungsbeispiele

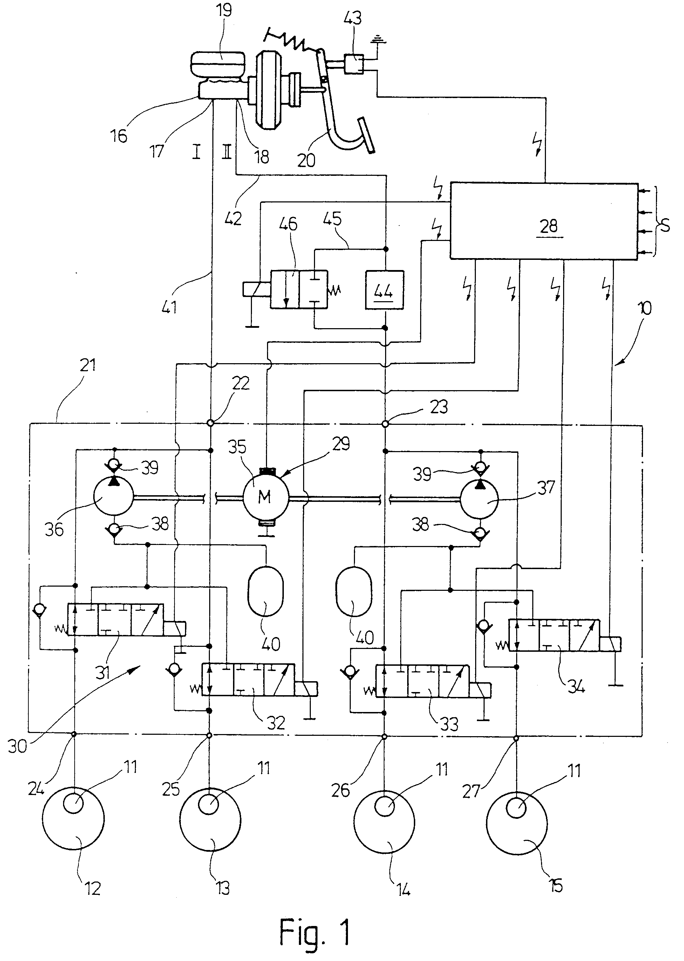

Bei der in Fig. 1 im Blockschaltbild dargestellten hydraulischen Zweikreisbremsanlage mit vorne/hinten-Vorderachs-/Hinterachs- oder sog. schwarz/weiß-Bremskreisaufteilung und mit einer Blockierschutzeinrichtung 10, auch Antiblockiersystem (ABS) genannt, für einen Personenkraftwagen als Beispiel eines Kraftfahrzeugs sind die Radbremszylinder 11 der Vorderräder 12,13 in dem einen Bremskreis, dem sog. Vorderachs-Bremskreis I, und die Radbremszylinder 11 der Hinterräder 14,15 in dem anderen Bremskreis, dem sog. Hinterachs-Bremskreis II, angeordnet. Die beiden Bremskreise I,II sind an einem Hauptbremszylinder 16 angeschlossen, und zwar an zwei getrennten Bremskreisausgängen 17,18 des Hauptbremszylinders 16. Der Hauptbremszylinder 16 steht mit einem Bremsflüssigkeitsbehälter 19 in Verbindung. Bei Betätigung eines Bremspedals 20 wird ein gleich großer Bremsdruck über die beiden Bremskreisausgänge 17,18 in den beiden Bremskreisen I,II ausgesteuert.

Die Blockierschutzeinrichtung 10 weist ein Vierkanal-Hydroaggregat 21 mit zwei Einlaßkanälen 22,23 und vier Auslaßkanälen 24 - 27 sowie eine Steuerelektronik 28 auf. Das Hydroaggregat 21 umfaßt eine Magnetventileinheit 30, bestehend aus vier als 3/3-Wegemagnetventile mit Federrückstellung ausgebildeten Steuerventilen 31 - 34 und einer Rückförderpumpe 29 mit zwei von einem Elektromotor 35 gemeinsam angetriebenen Pumpenelementen 36,37, von denen jeweils eines in einem der Bremskreise I,II angeordnet ist. Jedem Auslaßkanal 24 - 27, an dem jeweils ein Radbremszylinder 11 der Räder 12 - 15 angeschlossen ist, ist eines der Steuerventile 31 - 34 zugeordnet. Dabei sind die Steuerventile 31 - 34 mit ihrem ersten Ventilanschluß an dem zugeordneten Auslaßkanal 24 - 27, mit ihrem zweiten Ventilanschluß an je einem Einlaßkanal 22,25 und mit ihrem dritten Ventilanschluß an dem Eingang jeweils eines Pumpenelements 36,37 der Rückförderpupe 29 angeschlossen. Ausgangsseitig ist das eine Pumpenelement 36 an dem Einlaßkanal 22 und das andere Pumpenelement 37 an dem Einlaßkanal 23 angeschlossen. Unmittelbar vor und nach jedem Pumpenelement 36,37 sind ein Pumpeneinlaßventil 38 und ein Pumpenauslaßventil 39 angeordnet. An den Pumpeneinlaßventilen 38 angeschlossene Niederdruck-Speicherkammern 40 lassen einen Druckabbau in den Radbremszylindern 11 unabhängig von der Pumpenfördermenge zu und überwinden den Öffnungsdruck der Pumpeneinlaßventile 38. Die Steuerventile 31 - 34 sind in bekannter Weise so ausgebildet, daß in ihrer ersten, nicht erregten Ventilstellung, der Ventilgrundstellung, ein ungehinderter Durchgang von den Einlaßkanälen 22,23 zu den Auslaßkanälen 24 - 27 besteht, wodurch der vom Hauptbremszylinder 16 ausgesteuerte Druck in die Radbremszylinder 11 der Räder 12 - 15 gelangt. In der zweiten Ventilstellung, der Ventilmittelstellung, die durch Erregung der Steuerventile 31 - 34 mit halbem Maximalstrom herbeigeführt wird, ist dieser Durchgang unterbrochen, und alle Ventilanschlüsse sind abgesperrt, so daß der in den Radbremszylindern 11 aufgebaute Bremsdruck konstant gehalten wird. In der dritten Ventilstellung, der Ventilendstellung, die durch Ventilerregung mit Maximalstrom eingestellt wird, werden die Auslaßkanäle 24 und 25 bzw. 26 und 27 und damit die Radbremszylinder 11 der Räder 12,13 bzw. 14,15 mit dem Eingang der Pumpenelemente 38 bzw. 39 verbunden, so daß zwecks Bremsdruckabbau Bremsflüssigkeit wieder aus den Radbremszylindern 11 abfließen kann. Der Einlaßkanal 22 des Hydroaggregats 21 ist über eine erste Bremsleitung 41 mit dem Bremskreisausgang 17 des Hauptbremszylinders 16 und der Einlaßkanal 23 über eine zweite Bremsleitung 42 mit dem Bremskreisausgang 18 des Hauptbremszylinders 16 verbunden.

Die Steuerventile 31 - 34 werden von der Steuerelektronik 28 bei Erreichen der Blockiergrenze zur Bremsdruckmodulation angesteuert. Hierzu werden der Steuerelektronik 28 elektrische Schlupfsignale s zugeführt, die von hier nicht dargestellten Radschlupfsensoren erzeugt werden. Jeweils ein Radschlupfsensor ist einem der Räder 12 - 15 zugeordnet und erfaßt einem an dem jeweiligen Rad 12 - 15 auftretenden Radschlupf. Außerdem ist der Steuerelektronik 28 noch das Ausgangssignal eines Bremslichtschalters 43 zugeführt, der hier dem Bremspedal 20 zugeordnet ist. Bei jeder Betätigung des Bremspedals 20 generiert der Bremslichtschalter 43 ein elektrisches Signal.

In der zweiten Bremsleitung 42 vom Bremskreisausgang 18 des Hauptbremszylinders 16 zu dem dem Hinterachs-Bremskreis II zugehörigen Einlaßkanal 23 des Hydroaggregats 21 ist eine Druckreduziervorrichtung 44 eingeschaltet, die so ausgebildet ist, daß ab einer bestimmten Druckschwelle an ihrem Ausgang ein niedrigerer Druck ansteht als an ihrem Eingang. Der Druckreduziervorrichtung 44 ist ein Bypaß 45 parallel geschaltet, in dem ein als 2/2-Wegemagnetventil mit Federrückstellung ausgebildetes Bypaßventil 46 angeordnet ist. Das Bypaßventil 46 ist so ausgebildet, daß es in seiner unerregten Grundstellung den Bypaß 45 sperrt und in seiner durch Magneterregung herbeiführbaren Umschaltstellung den Bypaß 45 freigibt und damit die Druckreduziervorrichtung 44 kurzschließt. Das Bypaßventil 46 wird von der Steuerelektronik 28 angesteuert, und zwar wird das Steuersignal von dem Ausgangssignal des Bremslichtschalters 43 abgeleitet, so daß bei jeder Betätigung des Bremspedals 20 ein Umschaltsignal an das Bypaßventil 46 gelangt. Innerhalb der Steuerelektronik 28 ist das Ausgangssignal des Bremslichtschalters 43 jedoch so verknüpft, daß bei Ausfall der Blockierschutzeinrichtung 10 oder Funktionsstörung der Blockierschutzeinrichtung, sei es durch Ausfall der Steuerelektronik 28 oder durch Fehler in der Magnetventileinheit 30, das Umschaltsignal für das Bypaßventil 46 unterdrückt wird.

Die Funktionsweise der beschriebenen Zweikreisbremsanlage ist wie folgt:

Bei Betätigung des Bremspedals 20 gelangt der von dem Hauptbremszylinder 16 ausgesteuerte Bremsdruck über die in ihrer Grundstellung befindlichen Steuerventile 31 - 34 der Magnetventileinheit 30 in alle Radbremszylinder 11 der Fahrzeugräder 12 - 15. Mit Betätigung des Bremspedals 20 gibt der Bremslichtschalter 43 ein Signal an die Steuerelektronik 28, die daraus ein Umschaltsignal ableitet und an das Bypaßventil 46 legt. Das Bypaßventil 46 schaltet um und die Druckreduziervorrichtung 44 ist durch den Bypaß 45 kurzgeschlossen. Damit wird in die Radbremszylinder 11 der Vorderräder 12,13 und der Hinterräder 14,15 der gleiche Bremsdruck eingesteuert. Mit zunehmender Fahrzeugabbremsung nimmt damit die Überbremsung der Hinterachse gegenüber der Vorderachse immer weiter zu. Erreichen die Hinterräder 14,15 die Blockiergrenze, so beginnt die Blockierschutzeinrichtung 10 mit der Regelung der Bremsdrücke in den Radbremszylindern 11, und zwar zuerst an den Hinterrädern 14,15 und mit weiter steigendem Druck des Hauptbremszylinders 16 auch an den Vorderrädern 12,13. Das Fahrzeug wird dann maximal abgebremst. Die Wirkungsweise der eine Bremsdruckmodulation an den Radbremszylindern 11 bewirkenden Blockierschutzeinrichtung 10 zum Abbau eines an den Fahrzeugrädern 11 - 15 auftretenden Schlupfes ist bekannt und braucht hier nicht näher beschrieben zu werden. Bei der Bremsdruckmodulation werden die Steuerventile 31 - 34 durch entsprechende Steuerung von der Steuerelektronik 28 in ihren drei Schaltstellungen hin- und hergeschaltet, wobei in der Grundstellung eine Druckerhöhung, in der Mittelstellung ein Druckhalten und in der Endstellung ein Druckabbau erfolgt. Überschüssige Bremsflüssigkeit wird in die Niederdruck-Speicherkammern 40 ausgeschoben und von dort über die Pumpenelemente 36,37 der Rückförderpumpe 29 in den Hauptbremszylinder 16 zurückgefördert.

Bei einem Defekt der Blockierschutzeinrichtung 10 wird von der Steuerelektronik 28 das Bypaßventil 46 nicht angesteuert. Das Bypaßventil 46 verbleibt damit in seiner Grundstellung oder wird durch seine Rückstellfeder in seine Grundstellung zurückgesetzt, in welcher es den Bypaß 45 sperrt. Damit ist die Druckreduziervorrichtung 44 in der zu dem Hinterradbremskreis II führenden Bremsleitung 42 wirksam und in die Radbremszylinder 11 der Hinterräder 14,15 wird bei Bremspedalbetätigung ein geringerer Bremsdruck eingesteuert als in die Radbremszylinder 11 der Vorderräder 12,13. Damit bleibt bei Ausfall der Blockierschutzeinrichtung 10 - wie bei den bekannten Zweikreisbremsanlagen - das Fahrzeugverhalten hinsichtlich seiner Spurstabilität durch Unterbremsen des Hinterachs-Bremskreises gegenüber dem Vorderachs-Bremskreis erhalten.

Die Druckreduziervorrichtung 44 kann als Druckregelventil (Druckreduzierventil, Druckminderer) oder als Druckbegrenzungsventil bekannter Bauart ausgebildet sein.

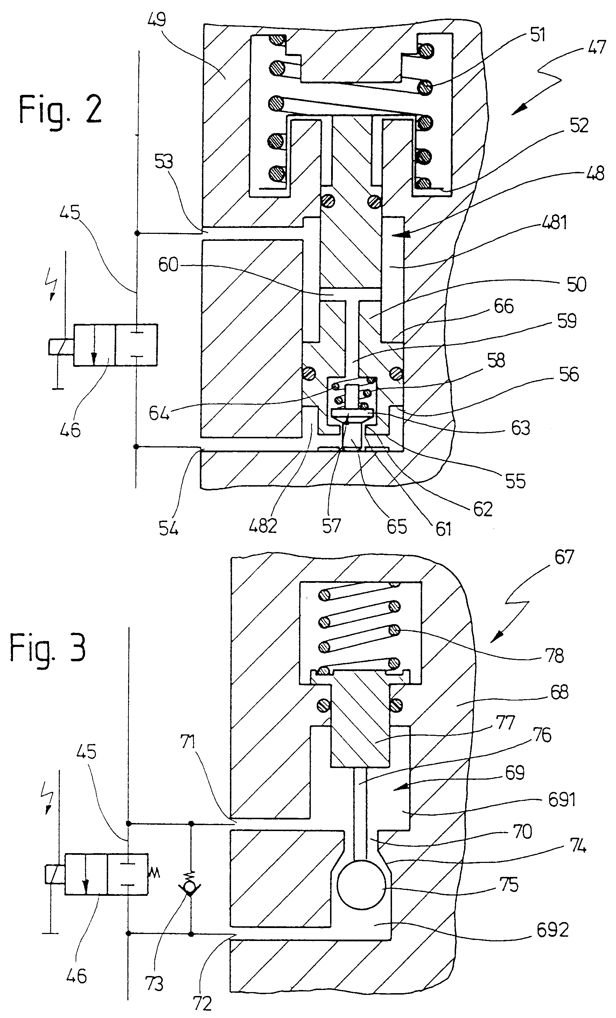

Ein Beispiel für die Ausbildung der Druckreduziervorrichtung 44 als Druckminderer 47 ist in Fig. 2 schematisch dargestellt. In einer Ventilkammer 48 eines Gehäuses 49 ist ein Steuerkolben 50 axial verschieblich geführt, der von einer Druckfeder 51 über einen Federteller 52 belastet ist. Der Steuerkolben 50 unterteilt die Ventilkammer 48 in einen mit dem Ventileingang 53 verbundenen Kammerabschnitt 481 und einen mit dem Ventilausgang 54 in Verbindung stehenden Kammerabschnitt 482. Der Ventileingang 53 ist mit dem Bremskreisausgang 18 des Hauptbremszylinders 16 und der Ventilausgang 54 mit dem Einlaßkanal 23 des Hydroaggregats 21 der Blockierschutzeinrichtung 10 verbunden. Mit 45 ist wiederum der Ventileingang 53 und Ventilausgang 54 verbindende Bypaß bezeichnet, in dem das Bypaßventil 46 angeordnet ist. Der Steuerkolben 50 weist auf gegenüberliegenden Seiten zwei ringförmige Druckbeaufschlagungsflächen 55,56 bzw. 66 auf. In dem Steuerkolben 50 ist ein Sitzventil 57 integriert, dessen Ventilraum 58 über eine Axialbohrung 59 und eine Querbohrung 60 im Steuerkolben 50 mit dem Kammerabschnitt 481 der Ventilkammer 48 verbunden ist. Der Ventilraum 58 ist über eine Ventilöffnung 61 mit dem anderen Kammerabschnitt 482 der Ventilkammer 48 verbunden. An der Ventilöffnung 61 ist ein Ventilsitz 62 ausgebildet, der mit einem Ventilglied 63 zusammenwirkt, das von einer Ventilschließfeder 64 belastet ist. Das Ventilglied 63 trägt einen durch die Ventilöffnung 61 hindurchragenden Ventilzapfen 65, der endseitig an dem Gehäuse 49 anliegt und die Ventilöffnung 61 ringförmig macht. Der Ventilzapfen 65 ist dabei so ausgebildet, daß in einem bestimmten Verschiebebereich des Steuerkolbens 50 das Ventilglied 63 ständig vom Ventilsitz 62 abgehoben und damit das Sitzventil 57 geöffnet ist. Erst ab einem bestimmten Ausgangsdruck in dem Kammerabschnitt 482 der Ventilkammer 48, der auf die beiden ringförmigen Druckbeaufschlagungsflächen 55,56 wirkt, ist der Steuerkolben 50 gegen die Kraft der Druckfeder 51 und dem im Kammerabschnitt 481 wirkenden Eingangsdruck soweit verschoben, daß das Ventilglied 63 des Sitzventils 57 auf den Ventilsitz 62 aufsitzt. Ab dieser Druckschwelle stellt sich der Steuerkolben 50 und damit die Bewegung des Ventilglieds 63 so ein, daß ein Kräftegleichgewicht besteht zwischen einerseits dem Ausgangsdruck im Kammerabschnitt 482 und andererseits dem Eingangsdruck im Kammerabschnitt 481 und der auf den Steuerkolben 50 wirkenden Druckfeder 51. Ab der erwähnten Druckschwelle liegt der Ausgangsdruck am Ventilausgang 54 immer um einen bestimmten, zur Eingangsdruckänderung proportionalen Betrag unter dem Eingangsdruck am Ventileingang 53.

Eine einfachere Konstruktion ergibt sich, wenn die Druckreduziervorrichtung 44 als Druckbegrenzungsventil 67 ausgebildet ist, wie dies schematisch in Fig. 3 dargestellt ist. Das Druckbegrenzungsventil 67 hat wiederum eine in einem Gehäuse 68 angeordnete Ventilkammer 69, die durch eine Ventilöffnung 70 in eine Einlaßkammer 691 und eine Auslaßkammer 692 unterteilt ist. Die Ventileinlaßkammer 691 ist mit dem Ventileinlaß 71 verbunden, während die Ventilauslaßkammer 692 mit dem Ventilauslaß 72 verbunden ist. Wie in Fig. 2 ist auch hier wiederum der Ventileinlaß 71 mit dem Bremskreisausgang 18 des Hauptbremszylinders 16 und der Ventilauslaß 72 mit dem Einlaßkanal 23 des Hydroaggregats 21 der Blockierschutzeinrichtung 10 verbunden. Ventileinlaß 71 und Ventilauslaß 72 sind wiederum über den Bypaß 45 miteinander verbunden, in dem das Bypaßventil 46 angeordnet ist. Parallel zum Bypaß 45 ist noch ein Rückschlagventil 73 mit zum Hauptbremszylinder 16 weisender Öffnungsrichtung geschaltet. An der Ventilöffnung 70 ist ein Ventilsitz 74 ausgebildet, mit dem ein kugelförmiges Ventilglied 75 zusammenwirkt. Das in der Auslaßkammer 692 liegende Ventilglied 75 ist über eine durch die Ventilöffnung 70 hindurchgehende Ventilstange 76 mit einem in der Einlaßkammer 691 axial verschieblichen Steuerkolben 77 verbunden, der von einer Druckfeder 78 in Öffnungsrichtung des Ventilgliedes 75 belastet ist. Ab einem bestimmten Druck in der Einlaßkammer 691 wird in der Auslaßkammer 692 ein Ausgangsdruck ausgesteuert, der unabhängig von einem weiteren Anstieg des Drucks in der Einlaßkammer 691 konstant ist.

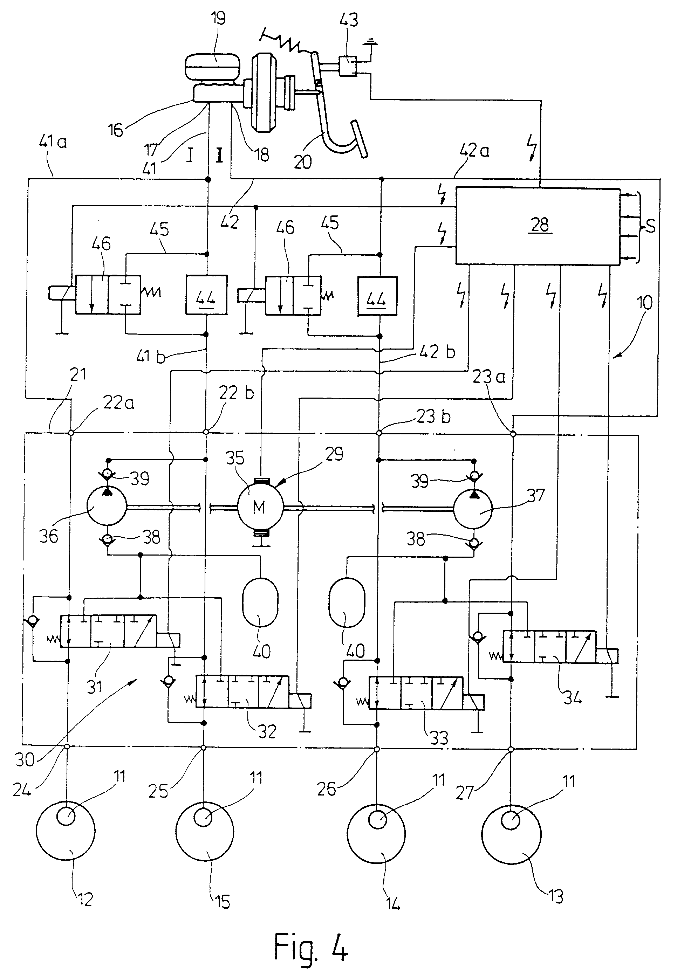

Bei der in Fig. 4 im Blockschaltbild dargestellten Zweikreisbremsanlage mit diagonaler Bremskreisaufteilung sind in jedem Bremskreis I,II die Radbremszylinder 10 eines Vorderrades 12 bzw. 13 und eines Hinterrades 14 bzw. 15 angeordnet. Entsprechend ist in dem Hydroaggregat 21' das Vorderrad 13 an dem Auslaßkanal 27 und das Hinterrad 15 an dem Auslaßkanal 25 angeschlossen. Für jeden Bremskreis I,II sind zwei Einlaßkanäle 22a,22b bzw. 23a,23b im Hydroaggregat 20' vorgesehen, die jeweils über separate Bremsleitungen 41a,41b bzw. 42a,42b mit dem demjeweiligen Bremskreis I bzw. II zugehörigen Bremskreisausgang 17 bzw. 18 des Hauptbremszylinders 16 verbunden sind. In jeder Bremsleitung 41b und 42b, die zu einem einem Hinterrad 14,15 zugeordneten Einlaßkanal 22b,23b führt, ist eine Druckreduziervorrichtung 44 mit Bypaßventil 46 angeordnet. Im übrigen entsprechen Aufbau und Wirkungsweise dieser Zweikreisbremsanlage derjenigen in Fig. 1. Mit Fig. 1 übereinstimmende Bauteile sind mit gleichen Bezugszeichen versehen.

Die Erfindung ist nicht auf die vorstehend beschriebenen Ausführungsbeispiele beschränkt. So kann bei der in fig. 1 dargestellten Zweikreisbremsanlage mit Vorderrad/Hinterrad-Bremskreisaufteilung anstelle eines Vierkanal-Hydroaggregats auch ein Dreikanal-Hydroaggregat verwendet werden. Die beiden Radbremszylinder der Hinterräder sind dann an einem gemeinsamen Auslaßkanal des Hydroaggregats angeschlossen. Entsprechend der reduzierten Zahl der Auslaßkanäle sind auch nur drei Steuerventile vorhanden. Die Steuerventile können ebenfalls von jeweils zwei 2/2-Wegemagnetventilen mit Federrückstellung gebildet werden, von denen das Einlaßventil den Druckaufbau und das Auslaßventil den Druckabbau in den Radbremszylindern durchführt.

**Patentansprüche**

1. Zweikreisbremsanlage für Kraftfahrzeuge mit einem zwei getrennte Bremskreisausgänge aufweisenden Hauptbremszylinder zum Aussteuern eines Bremsdrucks bei Bremspedalbetätigung, mit einer Blockierschutzeinrichtung (ABS), die ein zwischen den Bremskreisanschlüssen des Hauptbremszylinders und den auf die beiden Bremskreise aufgeteilten Radbremszylindern der Fahrzeugräder angeordnetes mehrkanaliges Hydroaggregat mit einer Magnetventilanordnung zur Bremsdruckmodulation in den Radbremszylindern und eine Steuerelektronik zur Steuerung der Magnetventilanordnung in Abhängigkeit von an den Fahrzeugrädern abgenommenen elektrischen Radschlupfsignalen aufweist, und mit mindestens einer Druckreduziervorrichtung für den Bremsdruck der Hinterräder, dadurch gekennzeichnet, daß in einem zur Druckreduziervorrichtung (44) parallelen Bypaß (45) ein als 2/2-Wegemagnetventil ausgebildetes Bypaßventil (46) angeordnet ist, das in seiner unerregten Grundstellung den Bypaß (45) sperrt und bei jeder Bremspedalbetätigung in seine den Bypaß (45) freigebenenden Offenstellung umgeschaltet wird, und daß bei Ausfall oder Funktionsstörung der Blockierschutzeinrichtung (10) die mit Bremspedalbetätigung verbundene Ansteuerung des Bypaßventils (46) unterbleibt.

2. Bremsanlage nach Anspruch 1, dadurch gekennzeichnet, daß die Druckreduziervorrichtung (44) als Druckminderer (47) aussebildet ist.

3. Bremsanlage nach Anspruch 1, dadurch gekennzeichnet, daß die Druckreduziervorrichtung (44) als Druckbegrenzungsventil (67) ausgebildet ist.

4. Bremsanlage nach einem der Ansprüche 1 - 3, dadurch gekennzeichnet, daß das Ansteuersignal für die Umschaltung des Bypaßventils (46) bei Bremspedalbetätigung von einem Bremslichtschalter (43) abgeleitet ist.

5. Bremsanlage nach einem der Ansprüche 1 - 4, dadurch gekennzeichnet, daß die Ansteuerung des Bypaßventils (46) durch die Steuerelektronik (28) der Blockierschutzeinrichtung (10) erfolgt.

6. Bremsanlage nach einem der Ansprüche 1 - 5 mit Vorderrad/Hinterrad-Bremskreisaufteilung, dadurch gekennzeichnet, daß die Druckreduziervorrichtung (44) mit Bypaßventil (46) zwischen dem Bremskreisanschluß (18) des Hauptbremszylinders (16) für den Hinterrad-Bremskreis (II) und dem Hydroaggregat (21) angeordnet ist.

7. Bremsanlage nach einem der Ansprüche 1 - 5 mit diagonaler Bremskreisaufteilung, dadurch gekennzeichnet, daß die Radbremszylinder (10) des Vorder- undHinterrades (12,13,14,15) eines jeden Bremskreises (I,II) über getrennte, zu dem Hydroaggregat (21') führende Verbindungsleitungen (41a,41b;42a,42b) mit dem zugeordneten Bremskreisausgang (17,18) des Hauptbremszylinders (16) verbunden sind und daß in jeder einem Hinterrad (14,13) zugeordneten Verbindungsleitung (41b,42b) eine Druckreduziervorrichtung (44) mit Bypaßventil (46) angeordnet ist.

Fig. 1

Fig. 2

Fig. 3

Fig. 4

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | FR-A-2 624 462 (ALFRED TEVES) <br> * Seite 1, Zeile 1 - Seite 4, Zeile 27; <br> Abbildungen 1,2 * | 1,2,4-6 | B60T8/26 <br> B60T8/94 <br> B60T8/42 |
| Y | | 3,7 | |
| | --- | | |
| Y | DE-A-3 410 083 (VOLKSWAGENWERK) <br> * Seite 9, letzter Absatz - Seite 11, Absatz 1; <br> Abbildung 2 * | 3 | |
| A | | 1,2,5,6 | |
| | --- | | |
| Y,D | DE-A-2 918 772 (ROBERT BOSCH) <br> * Zusammenfassung * <br> * Seite 14, Absatz 2; Abbildung 2 * | 7 | |
| A,D | * Ansprüche 1-4; Abbildung 1 * | 1-3,6 | |
| | ----- | | |

| | **RECHERCHIERTE SACHGEBIETE (Int. Cl.5 )** |
|---|---|
| | B60T |

Der vorliegende Recherchenbericht wurde für alle Patentansprüche erstellt

| Recherchenort | Abschlußdatum der Recherche | Prüfer |
|---|---|---|
| DEN HAAG | 26 FEBRUAR 1992 | MEIJS P. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes
    Dokument

EPO FORM 1503 03.82 (P0403)